# EUROPEAN PATENT APPLICATION

(11) **EP 4 350 798 A1**
(43) Date of publication of application: **10.04.2024**
(21) Application number: 22811259.5
(22) Date of filing: 20.05.2022
(51) Int. Cl.: H01M 4/13, H01M 10/052, H01M 10/0566, H01M 10/0587, H01M 50/538

(54) **NON-AQUEOUS ELECTROLYTE SECONDARY BATTERY**

(30) Priority: 25.05.2021 JP 2021087432
(71) Applicant: Panasonic Energy Co., Ltd., Osaka 570-8511 (JP)
(72) Inventor: SHIMIZU, Arisa, Kadoma-shi, Osaka 571-0057 (JP); KOBAYASHI, Kei, Kadoma-shi, Osaka 571-0057 (JP); MAKHIJA, Gagan, Kadoma-shi, Osaka 571-0057 (JP); MIZUKOSHI, Fumikazu, Kadoma-shi, Osaka 571-0057 (JP); MIZAWA, Atsushi, Kadoma-shi, Osaka 571-0057 (JP)
(74) Representative: Novagraaf International SA
(86) International application number: PCT/JP2022/020987
(87) International publication number: WO 2022/249989

(57) **Abstract**

Provided is a non-aqueous electrolyte secondary battery in which the positions of a plurality of exposed parts are controlled so that it is possible to connect a plurality of tabs to predetermined positions in accordance with a thickness variation of electrodes. A non-aqueous electrolyte secondary battery according to one aspect of the present disclosure comprises: an electrode body in which a positive electrode and a negative electrode are wound with a separator therebetween; an electrolyte; and a cylindrical outer can which accommodates the electrode body and the electrolyte, wherein the positive electrode has a current collector and a mixed layer laminated on at least a portion of the surface of the current collector, a plurality of exposed parts where the current collector is exposed are formed on the surface of the positive electrode, tabs are connected to the respective exposed parts, and when the rotation angle of the electrode body from a winding start-side end to a winding finish-side end of the exposed parts relative to the winding center is defined as an exposed part angle, the exposed part angle of the exposed parts positioned on the winding start side is greater than the exposed part angle of the exposed parts positioned on the winding finish side.

## Description

### TECHNICAL FIELD

The present disclosure generally relates to a non-aqueous electrolyte secondary battery.

### BACKGROUND ART

A positive electrode and a negative electrode, which are electrodes of a non-aqueous electrolyte secondary battery, each has a current collector and a mixture layer formed on a surface of the current collector. The mixture layer includes an active material that may reversibly occlude and release Li ions. An exposed portion where the current collector is exposed is formed on a surface of the electrode, and a tab to make connection between an electrode assembly and a battery terminal is connected to the exposed portion.

Patent Literatures 1 to 3 disclose art of providing a plurality of exposed portions for connecting a tab along a winding direction of an electrode assembly for a purpose of inhibiting heat generation in a tab-connected portion. Patent Literature 3 describes that, in a positive electrode, a length L of each of the exposed portions in the winding direction and a radius R of a portion including the exposed portion present on the most terminal winding side in the electrode assembly satisfy a relationship of L≥2πR.

### CITATION LIST

### PATENT LITERATURE

PATENT LITERATURE 1: Japanese Unexamined Patent Application Publication No. H10-261439
PATENT LITERATURE 2: Japanese Unexamined Patent Application Publication No. 2000-277155
PATENT LITERATURE 3: Japanese Unexamined Patent Application Publication No. 2002-164044

### SUMMARY

### TECHNICAL PROBLEM

To connect a plurality of tabs drawn out from an electrode assembly to a battery terminal, the plurality of the tabs is preferably disposed at predetermined positions. Since the plurality of the tabs is each connected to the exposed portions, the exposed portion is necessarily formed at a position in a surface of the electrode where the plurality of the tabs is to be disposed. However, the positions of the exposed portions are affected by a thickness of the electrode to generate variation, and thereby variation of the thickness of the electrode between lots is needed to be considered when the exposed portion is each disposed on the electrode. The art disclosed in Patent Literatures 1 to 3 do not consider the variation of the positions of the exposed portion, and still has a room for improvement. Lengthening each of the exposed portions, as disclosed in Patent Literature 3, reduces a mass of a mixture layer to considerably decrease a battery capacity.

It is an advantage of the present disclosure to provide a non-aqueous electrolyte secondary battery in which sizes of a plurality of exposed portions are regulated so that a plurality of tabs may be connected to predetermined positions according to variation of the thickness of the electrode.

### SOLUTION TO PROBLEM

A non-aqueous electrolyte secondary battery of an aspect of the present disclosure comprises: an electrode assembly in which a first electrode and a second electrode having different polarities from each other are wound with a separator interposed therebetween; an electrolyte liquid; and a cylindrical exterior housing can housing the electrode assembly and the electrolyte liquid, wherein the first electrode has a current collector and a mixture layer stacked on at least a part of a surface of the current collector, a plurality of exposed portions where the current collector is exposed is formed on a surface of the first electrode, and a tab is connected to each of the exposed portions, and when a rotation angle from an end on an initial winding side to an end on a terminal winding side of the exposed portion relative to a winding center of the electrode assembly is defined as an exposed portion angle, an exposed portion angle of the exposed portion positioned on the initial winding side is larger than an exposed portion angle of the exposed portion positioned on the terminal winding side.

### ADVANTAGEOUS EFFECT OF INVENTION

According to the non-aqueous electrolyte secondary battery of an aspect of the present disclosure, the plurality of the tabs may be connected to predetermined positions.

### BRIEF DESCRIPTION OF DRAWINGS

FIG. 1 is an axial sectional view of a cylindrical secondary battery of an example of an embodiment.
FIG. 2 is a perspective view of a wound electrode assembly comprised in the secondary battery illustrated in FIG. 1.
FIG. 3 is a front view of a positive electrode that constitutes an electrode assembly illustrated in FIG. 2 with an unwound state.
FIG. 4 is a plane view of the electrode assembly illustrated in FIG. 2 viewed from an axial direction.

### DESCRIPTION OF EMBODIMENTS

Hereinafter, an example of an embodiment of a cylindrical secondary battery according to the present disclosure will be described in detail with reference to the Drawings. In the following description, specific shapes, materials, values, directions, and the like, which are examples for facilitating understanding of the present invention, may be appropriately modified with specifications of cylindrical secondary batteries. When a plurality of embodiments and modified examples are included in the following description, use in appropriate combination of characteristic portions thereof are anticipated in advance.

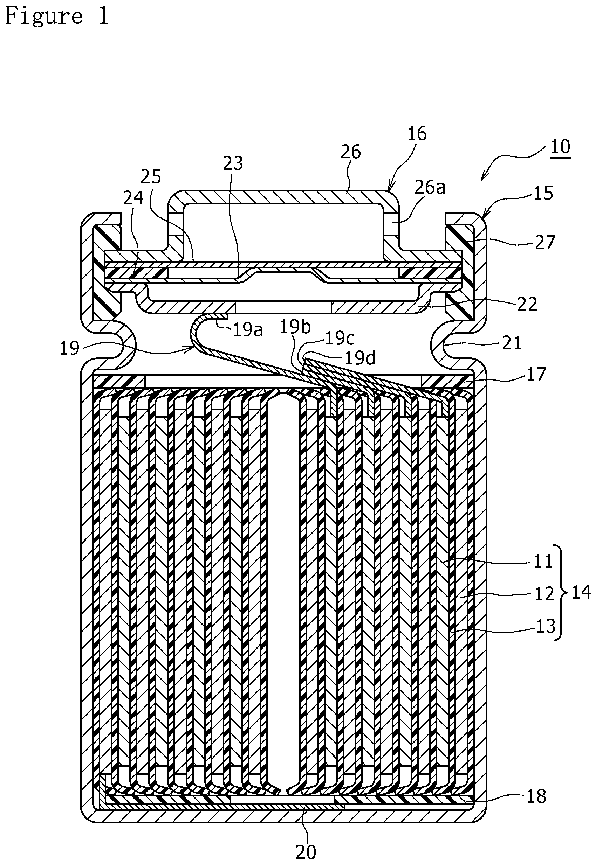

FIG. 1 is an axial sectional view of a non-aqueous electrolyte secondary battery 10 of an example of an embodiment. In the secondary battery 10 illustrated in FIG. 1, an electrode assembly 14 and an electrolyte liquid (not illustrated) are housed in an exterior housing can 15. The electrode assembly 14 has a wound structure in which band-shaped electrodes (a positive electrode 11 and a negative electrode 12) are wound with a separator 13 interposed therebetween. For a non-aqueous solvent in the electrolyte liquid (organic solvent), carbonates, lactones, ethers, ketones, esters, and the like may be used, and two or more of these solvents may be mixed to use. When two or more of the solvents are mixed to use, a mixed solvent including a cyclic carbonate and a chain carbonate is preferably used. For example, ethylene carbonate (EC), propylene carbonate (PC), butylene carbonate (BC), and the like may be used as the cyclic carbonate, and dimethyl carbonate (DMC), ethyl methyl carbonate (EMC), diethyl carbonate (DEC), and the like may be used as the chain carbonate. For an electrolyte salt in the electrolyte liquid, LiPF₆, LiBF₄, LiCF₃SO₃, and the like, and a mixture thereof may be used. An amount of the electrolyte salt dissolved in the non-aqueous solvent is, for example, greater than or equal to 0.5 mol/L and less than or equal to 2.0 mol/L. Hereinafter, for convenience of description, a sealing assembly 16 side will be described as "the upper side", and the bottom side of the exterior housing can 15 will be described as "the lower side".

The sealing assembly 16 seals an opening of an upper end of the exterior housing can 15 to seal an inside of the secondary battery. Insulating plates 17 and 18 are provided on the upper and lower sides of the electrode assembly 14, respectively. A positive electrode tab 19 extends through a through hole in the insulating plate 17 toward upper and lower sides, and makes connection between a filter 22, which is a bottom plate of the sealing assembly 16, and the positive electrode 11 included in the electrode assembly 14. As a result, the positive electrode 11 and the sealing assembly 16 are connected, and in the secondary battery 10, a cap 26, which is a top plate of the sealing assembly 16 electrically connected to the filter 22 becomes a positive electrode terminal. A material of the positive electrode tab 19 is aluminum, for example. Meanwhile, a negative electrode tab 20 extends through an outside of the insulating plate 18 toward a bottom side of the exterior housing can 15, and welded with a bottom inner face of the exterior housing can 15. As a result, the negative electrode 12 and the exterior housing can 15 are connected, and in the secondary battery 10, the exterior housing can 15 becomes a negative electrode terminal. A material of the negative electrode tab 20 is nickel, for example.

From the electrode assembly 14, four positive electrode tabs 19a, 19b, 19c, and 19d are drawn out, and electrically connected to each other. In the present embodiment, only the positive electrode tab 19a is connected to the filter 22, but the connection state of the positive electrode tabs 19 is not limited to this example. The positive electrode tabs 19 drawn out from the electrode assembly 14 may be directly connected to the sealing assembly 16 as the present embodiment, or may be connected to the sealing assembly 16 via a known current collecting member.

A number of the positive electrode tabs 19 drawn out from the electrode assembly 14 may be any as long as it is a plurality, that is, greater than or equal to two. The plurality of the tabs drawn out from the electrode assembly 14 may reduce connection resistance between the positive electrode 11 and the sealing assembly 16, and may consequently improve output characteristics of the secondary battery 10. The number of the positive electrode tabs 19 is preferably greater than or equal to two and less than or equal to ten, and more preferably greater than or equal to three and less than or equal to six.

The aspects of the positive electrode tabs 19 and the negative electrode tab 20 are not limited to the examples of the present embodiment. For example, a plurality of the positive electrode tabs 19 and a plurality of the negative electrode tabs 20 may be drawn out from the electrode assembly 14, or one positive electrode tab 19 and a plurality of the negative electrode tabs 20 may be drawn out from the electrode assembly 14. In the present embodiment, a case where the first electrode is the positive electrode 11 and the second electrode is the negative electrode 12 will be described, but the first electrode may be the negative electrode 12. That is, at least one of the positive electrode 11 and the negative electrode 12 corresponds to the first electrode.

The exterior housing can 15 is, for example, a metallic bottomed cylindrical exterior housing can. A gasket 27 is provided between the exterior housing can 15 and the sealing assembly 16 to achieve sealability inside the secondary battery 10. The exterior housing can 15 has a grooved portion 21 formed by, for example, pressing the side wall thereof from the outside to support the sealing assembly 16. The grooved portion 21 is preferably formed circularly along the circumferential direction of the exterior housing can 15, and supports the sealing assembly 16 with the upper face thereof.

The sealing assembly 16 has a stacked structure of a filter 22, a lower vent member 23, an insulating member 24, an upper vent member 25, and a cap 26 in this order from the electrode assembly 14 side. Each member constituting the sealing assembly 16 has, for example, a disk shape or a ring shape, and each member except for the insulating member 24 is electrically connected to each other. The lower vent member 23 and the upper vent member 25 are connected to each other at each of centers thereof, and the insulating member 24 is interposed between each of the circumferences thereof. If the internal pressure of the battery increases due to abnormal heat generation, for example, the lower vent member 23 breaks and thus the upper vent member 25 expands toward the cap 26 side to be separated from the lower vent member 23, resulting in cutting off of an electrical connection between both the members. If the internal pressure further increases, the upper vent member 25 breaks, and gas is discharged through an opening 26a of the cap 26.

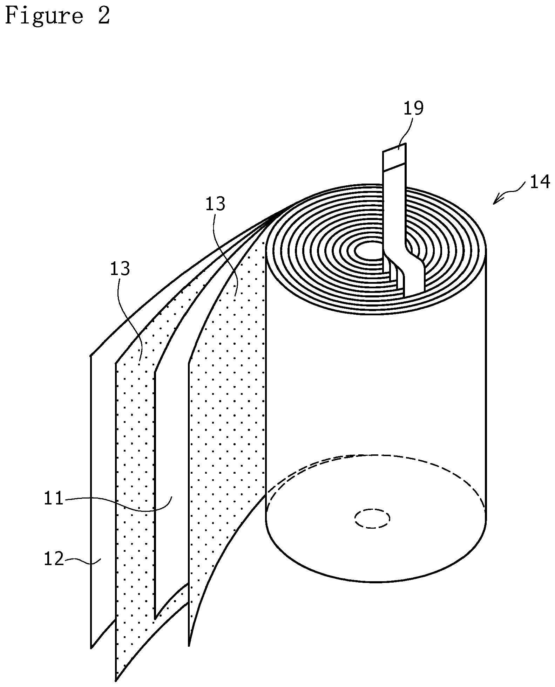

Next, the electrode assembly 14 will be described with reference to FIG. 2. FIG. 2 is a perspective view of the electrode assembly 14. As described above, the electrode assembly 14 has a wound structure in which the positive electrode 11 and the negative electrode 12 are spirally wound with the separator 13 interposed therebetween. All of the positive electrode 11, the negative electrode 12, and the separator 13 are formed in a band shaped, and spirally wound around a winding core disposed along a winding axis to be alternately stacked in the radial direction of the electrode assembly 14. In the radial direction, a winding axis side is referred to as an inner peripheral side, and the opposite side thereof is referred to as an outer peripheral side. In the electrode assembly 14, the longitudinal direction of the positive electrode 11 and the negative electrode 12 becomes a winding direction, and the width direction of the positive electrode 11 and the negative electrode 12 becomes an axial direction. The positive electrode tabs 19 are drawn out in the axial direction from four positions on the upper face of the electrode assembly 14.

The negative electrode 12 included in the electrode assembly 14 is typically formed to be larger than the positive electrode 11 to prevent precipitation of lithium on the negative electrode 12. In specific, a length of the negative electrode 12 in the width direction is larger than a length of the positive electrode 11 in the width direction. In addition, a length of the negative electrode 12 in the longitudinal direction is larger than a length of the positive electrode 11 in the longitudinal direction. As a result, at least a portion on which a positive electrode mixture layer 30 of the positive electrode 11 is formed is disposed opposite to a portion on which a negative electrode mixture layer of the negative electrode 12 is formed with the separator 13 interposed therebetween when wound as the electrode assembly 14.

The negative electrode 12 has a band-shaped negative electrode current collector and a negative electrode mixture layer stacked on at least a part of a surface of the negative electrode current collector. The negative electrode mixture layer is formed on at least one of the inner peripheral side and outer peripheral side of the negative electrode current collector, and preferably formed on an entire region of both surfaces of the negative electrode current collector except for a negative electrode exposed portion, described later. For the negative electrode current collector, a foil of a metal such as copper, a film in which such a metal is disposed on a surface layer thereof, and the like are used, for example. A thickness of the negative electrode current collector is, for example, greater than or equal to 5 µm and less than or equal to 30 µm.

The negative electrode mixture layer preferably includes a negative electrode active material and a binder. The negative electrode mixture layer may be produced by, for example, applying a negative electrode mixture slurry including the negative electrode active material, the binder, and a solvent such as water on both the surfaces of the negative electrode current collector, and drying and then rolling the coating.

The negative electrode active material included in the negative electrode mixture layer is not particularly limited as long as it may reversibly occlude and release lithium ions. For example, carbon-based materials such as natural graphite and artificial graphite, metals that form an alloy with lithium, such as Si and Sn, an alloy and oxide including these materials, or the like may be used.

The negative electrode active material may include the carbon-based material and a silicon-based material. Examples of the silicon-based material include Si, an alloy including Si, and silicon oxide such as SiOₓ (x represents 0.8 to 1.6). The silicon-based material is a negative electrode active material that may more increase the battery capacity than the carbon-based material. A content rate of the silicon-based material in the negative electrode active material is preferably greater than or equal to 3 mass% relative to a mass of the negative electrode active material from the viewpoints of increasing the battery capacity, inhibiting deterioration in the charge-discharge cycle characteristic, and the like. An upper limit of the content rate of the silicon-based material is, for example, 20 mass%.

Examples of the binder included in the negative electrode mixture layer include styrene-butadiene rubber (SBR), nitrile-butadiene rubber (NBR), carboxymethylcellulose (CMC) or a salt thereof, polyacrylic acid (PAA) or a salt thereof (which may be PAA-Na, PAA-K, and the like, or a partially neutralized salt), and polyvinyl alcohol (PVA). The binder may include fluororesins such as polytetrafluoroethylene (PTFE) and polyvinylidene fluoride (PVdF), polyacrylonitrile (PAN), a polyimide resin, an acrylic resin, and a polyolefin resin. These materials may be used singly, or a plurality of kinds thereof may be mixed to use.

On an end on a terminal winding side of the negative electrode 12, a negative electrode exposed portion where the negative electrode current collector is exposed is formed. The negative electrode exposed portion is a portion where the surface of the negative electrode current collector is uncovered with the negative electrode mixture layer, and preferably provided on both the surfaces of the negative electrode 12 so as to be stacked in a thickness direction of the negative electrode 12. The negative electrode exposed portion is provided by, for example, intermittent application in which the positive electrode mixture slurry is not applied on a part of the negative electrode current collector. The negative electrode tab 20 is connected to the negative electrode exposed portion by ultrasonic welding or the like.

For the separator 13, a porous sheet having an ion permeation property and an insulation property is used. Specific examples of the porous sheet include a fine porous thin film, a woven fabric, and a nonwoven fabric. As a material of the separator 13, an olefin resin such as polyethylene and polypropylene is preferable. A thickness of the separator 13 is, for example, greater than or equal to 10 µm and less than or equal to 50 µm. The separator 13 has tended to be thinned as higher capacity and higher output of the battery. The separator 13 has a melting point of, for example, approximately greater than or equal to 130°C and less than or equal to 180°C.

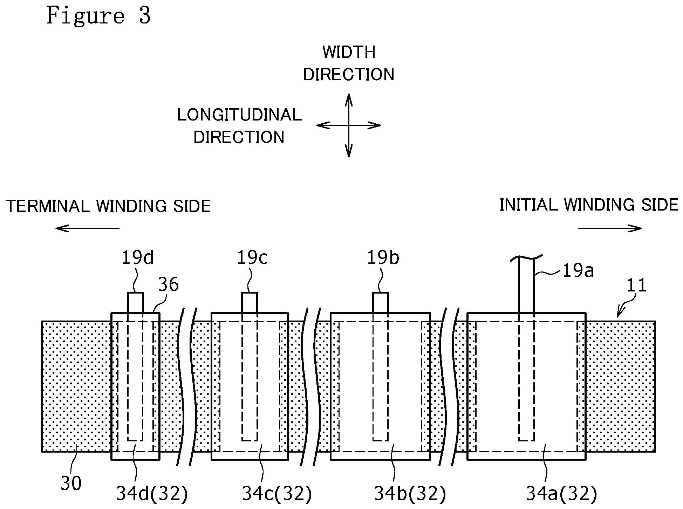

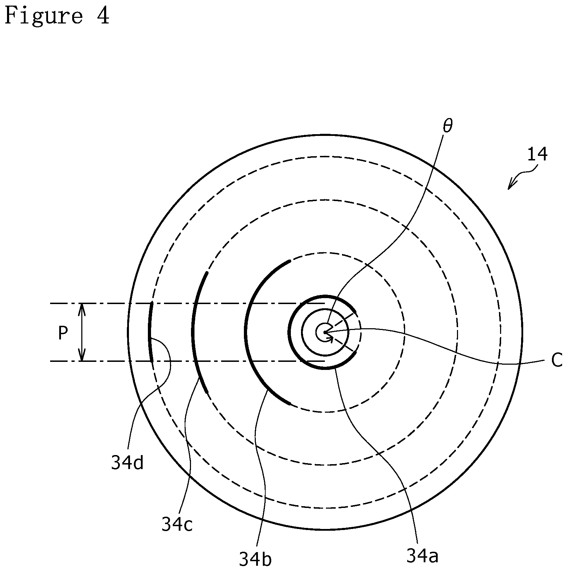

Next, the positive electrode 11 according to the present embodiment will be described in detail with reference to FIG. 3 and FIG. 4. FIG. 3 is a front view of the positive electrode 11 constituting the electrode assembly 14. FIG. 3 illustrates the positive electrode 11 in an unwound state.

The positive electrode 11 has a band-shaped positive electrode current collector 32 and the positive electrode mixture layer 30 stacked on at least a part of a surface of the positive electrode current collector 32. The positive electrode mixture layer 30 is formed on at least one of the inner peripheral side and outer peripheral side of the positive electrode current collector 32, and preferably formed on an entire region of both surfaces of the positive electrode current collector 32 except for a positive electrode exposed portion 34, described later. For the positive electrode current collector 32, a foil of a metal such as aluminum, a film in which such a metal is disposed on a surface layer thereof, and the like are used, for example. A thickness of the positive electrode current collector 32 is, for example, greater than or equal to 10 µm and less than or equal to 30 µm. The variation of the thickness of the positive electrode 11 is, for example, greater than or equal to -5% and less than or equal to +5% relative to a designed value.

The positive electrode mixture layer 30 preferably includes a positive electrode active material, a conductive agent, and a binder. The positive electrode mixture layer 30 may be produced by, for example, applying a positive electrode mixture slurry including the positive electrode active material, the conductive agent, the binder, and a solvent such as N-methyl-2-pyrrolidone (NMP) on both the surfaces of the positive electrode current collector 32, and drying and then rolling.

Examples of the positive electrode active material included in the positive electrode mixture layer 30 include a lithium-transition metal oxide containing transition metal elements such as Co, Mn, and Ni. The lithium-transition metal oxide is, for example, LiₓCoO₂, LiₓNiO₂, LiₓMnO₂, LiₓCo_{y}Ni_{1-y}O₂, LiₓCo_{y}M_{1-y}O₂, LiₓNi_{1-y}M_{y}O₂, LiₓMn₂O₄, LiₓMn_{2-y}M_{y}O₄, LiMPO₄, or Li₂MPO₄F, wherein M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3. These may be used singly, or a plurality of kinds thereof may be mixed to use. In terms of attempting a higher capacity of the non-aqueous electrolyte secondary battery, the positive electrode active material preferably includes a lithium-nickel composite oxide such as LiₓNiO₂, LiₓCo_{y}Ni_{1-y}O₂, and LiₓNi_{1-y}M_{y}O₂, wherein M represents at least one of Na, Mg, Sc, Y, Mn, Fe, Co, Ni, Cu, Zn, Al, Cr, Pb, Sb, and B, 0 < x ≤ 1.2, 0 < y ≤ 0.9, and 2.0 ≤ z ≤ 2.3.

Examples of the conductive agent included in the positive electrode mixture layer 30 include carbon particles such as carbon black (CB), acetylene black (AB), Ketjenblack, carbon nanotube (CNT), graphene, and graphite. These may be used singly, or a plurality of kinds thereof may be mixed to use.

Examples of the binder included in the positive electrode mixture layer 30 include fluororesins such as polytetrafluoroethylene (PTFE) and polyvinylidene fluoride (PVdF), polyacrylonitrile (PAN), a polyimide resin, an acrylic resin, and a polyolefin resin. These may be used singly, or a plurality of kinds thereof may be mixed to use. When the positive electrode mixture slurry is prepared in an aqueous solvent, styrene-butadiene rubber (SBR), nitrile rubber (NBR), CMC or a salt thereof, polyacrylic acid or a salt thereof, polyvinyl alcohol, and the like may be used.

On the surface of the positive electrode 11, a plurality of positive electrode exposed portions 34 where the positive electrode current collector 32 is exposed is formed along the winding direction of the electrode assembly 14. The positive electrode exposed portion 34 is a portion where the surface of the positive electrode current collector 32 is uncovered with the positive electrode mixture layer 30, and the positive electrode tab 19 is connected to each of the positive electrode exposed portions 34. The positive electrode exposed portions 34 are provided by, for example, intermittent application in which the positive electrode mixture slurry is not applied on a part of the positive electrode current collector 32.

As illustrated in FIG. 3, the positive electrode exposed portions 34 are provided on an entire length in the width direction, and the positive electrode tabs 19 are preferably connected to the positive electrode exposed portion 34 longitudinally in the width direction. As a result, a contacting area between the positive electrode tabs 19 and the positive electrode current collector 32 increases to improve current collectability. In the width direction, a ratio of a length in which the positive electrode tabs 19 contact with the positive electrode exposed portion 34 relative to the entire length of the positive electrode 11 is, for example, greater than or equal to 0.5 and less than or equal to 0.9.

The positive electrode exposed portion 34 is more widely formed than the positive electrode tab 19 in the longitudinal direction. A width of the tab in the longitudinal direction is, for example, greater than or equal to 1 mm and less than or equal to 7 mm, and a width of the positive electrode exposed portion 34 in the longitudinal direction is, for example, greater than or equal to 5 mm and less than or equal to 40 mm. The positive electrode exposed portion 34 is preferably provided on both the surfaces of the positive electrode 11 so as to be stacked in the thickness direction of the positive electrode 11. The positive electrode tabs 19 are bonded to the positive electrode exposed portion 34 by, for example, ultrasonic welding.

In the example illustrated in FIG. 3, four positive electrode exposed portions 34, namely positive electrode exposed portions 34a, 34b, 34c, and 34d, are provided in this order from the initial winding side. The width of the positive electrode exposed portion 34 in the longitudinal direction becomes smaller in the order of the positive electrode exposed portions 34a, 34b, 34c, and 34d. A size of each of the positive electrode exposed portions 34 is not limited to the example illustrated in FIG. 3, and for example, the width of the positive electrode exposed portion 34 positioned in the terminal winding side in the longitudinal direction of the positive electrode exposed portion 34 may be longer than the width of the positive electrode exposed portion 34 positioned in the initial winding side in the longitudinal direction of the positive electrode exposed portion 34.

Each of the positive electrode tabs 19a, 19b, 19c, and 19d is connected to a substantial center in the longitudinal direction of each of the positive electrode exposed portions 34a, 34b, 34c, and 34d. Each of the positive electrode tabs 19a, 19b, 19c, and 19d is drawn out from one end of the positive electrode 11 in the width direction.

On the surface of the positive electrode 11, a protective member 36 is provided so as to cover a part of the positive electrode tabs 19 and the positive electrode exposed portions 34. The protective member 36 is an insulative member to prevent internal short circuit of the positive electrode tabs 19 and the positive electrode exposed portions 34 with the opposite negative electrode mixture layer if the separator 13 breaks. The protective member 36 preferably adheres to the surface of the positive electrode mixture layer 30 over the positive electrode exposed portions 34 of the positive electrode 11 in the longitudinal direction. The protective member 36 is preferably longer than the positive electrode 11 in the width direction of the positive electrode 11.

The protective member 36 is, for example, an adhesive tape having a base part and an adhesive part formed on one surface of the base part. Between the base part and the adhesive part, a heat-resistant layer including inorganic particles such as a metal oxide may be provided, for example. The base part is an insulative resin, and for example, polyphenylene sulfide (PPS), polyether ether ketone (PEEK), polyimide (PI), polypropylene (PP), polyethylene terephthalate (PET), polybutylene terephthalate (PBT), and the like may be used. A thickness of the base part is, for example, greater than or equal to 5 µm and less than or equal to 50 µm.

The adhesive part is a portion for the protective member 36 to adhere to the surface of the positive electrode 11. A thickness of the adhesive part is, for example, greater than or equal to 1 µm and less than or equal to 30 µm. The adhesive part may include at least one of a rubber polymer and an acrylic polymer. Since having adhesiveness, the rubber polymer and the acrylic polymer may allow the protective member 36 to adhere to the surface of the positive electrode 11. Into the adhesive part, a silicone polymer may be further added, for example.

FIG. 4 is a plane view of the electrode assembly 14 of an example of an embodiment viewed from the axial direction. When a rotation angle from an end on the initial winding side to an end on the terminal winding side of the positive electrode exposed portion 34 relative to a winding center C of the electrode assembly 14 is defined as an exposed portion angle θ, the exposed portion angle θ of each of the positive electrode exposed portions 34 satisfies the following relationship: an exposed portion angle θ of the positive electrode exposed portion 34a > an exposed portion angle θ of the positive electrode exposed portion 34b > an exposed portion angle θ of the positive electrode exposed portion 34c > an exposed portion angle θ of the positive electrode exposed portion 34d. As a result, even when variation, relative to the positive electrode exposed portion 34d on the most terminal winding side, of positions of the other positive electrode exposed portions 34a, 34b, and 34c is generated, at least a part of each of the positive electrode exposed portions 34a, 34b, and 34c is included within a range of a region P illustrated in FIG. 4. The exposed portion angle θ of each of the positive electrode exposed portions 34 may be appropriately decided according to a prospected variation range of the thickness of the positive electrode 11.

Since at least a part of each of the positive electrode exposed portions 34 is included within the range of the region P, any of the positive electrode tabs 19 may be disposed within the range of the region P. A degree of the variation of the positions of the positive electrode exposed portions 34a, 34b, and 34c relative to the positive electrode exposed portion 34d may be evaluated based on measurement results of the thickness of the positive electrode 11. Based on the evaluation results, the positions where the positive electrode tabs 19 are to be connected may be decided so that the positive electrode tabs 19 are disposed within the range of the region P. Note that, the exposed portion angle θ is the rotation angle from the end on the initial winding side to the end on the terminal winding side of the positive electrode exposed portion 34, and thereby the angle may be more than 360°.

Regulating the sizes of the positive electrode exposed portions 34 as above may connect the plurality of the positive electrode tabs 19 at the predetermined positions according to the thickness variation of the positive electrode 11 without enlarging the area of the exposed portion compared with a case of enlarging the widths of all the positive electrode exposed portions 34 in the longitudinal direction, as described in Patent Literature 3. An arc formed with the positive electrode 11 is small on the initial winding side, and a sufficiently large exposed portion angle θ is formed even with a short width of the positive electrode exposed portion 34 in the longitudinal direction. Thus, regulating the sizes of the positive electrode exposed portions 34 as above may connect the plurality of the positive electrode tabs 19 at the predetermined positions according to the thickness variation of the positive electrode 11 without enlarging the area of the exposed portion compared with a case of enlarging the width of the exposed portion on the terminal winding side based on the exposed portion on the initial winding side.

The positive electrode tabs 19 are arrayed in substantially one line in the radial direction from the winding center C in FIG. 4, but the layout of the positive electrode tabs 19 is not limited to this example. For example, the positive electrode tabs 19 may be arrayed in substantially one line in the radial direction across the winding center C, and may be disposed with substantially same angles with the winding center C as a center. In this case, disposition of the positive electrode exposed portions 34 is appropriately changed according to the disposing direction of the positive electrode tabs 19.

### EXAMPLES

Hereinafter, the present disclosure will be further described with Examples, but the present disclosure is not limited to these Examples.

### [Production of Positive Electrode]

Mixing 100 parts by mass of LiNi_{0.88}Co_{0.09}Al_{0.03}O₂, 1.0 part by mass of acetylene black (AB), and 0.9 parts by mass of polyvinylidene fluoride (PVdF) was performed, and an appropriate amount of N-methyl-2-pyrrolidone (NMP) was added to prepare a positive electrode mixture slurry. Then, this positive electrode mixture slurry was applied on both surfaces of a band-shaped positive electrode current collector made of aluminum foil so as to form four positive electrode exposed portions. This applied film was dried and then rolled, and cut to a predetermined electrode plate size to produce a positive electrode in which positive electrode mixture layers were formed on both the surface of the positive electrode current collector with 706 mm in entire length. A positive electrode tab made of aluminum was welded with each of the positive electrode exposed portions. Widths of the positive electrode exposed portions in a longitudinal direction were set to 22 mm, 18 mm, 12 mm, and 8 mm in this order from an initial winding side so that at least a part of each of the positive electrode exposed portions was included within a predetermined range based on the positive electrode exposed portion on the most terminal winding side even when thickness variation of the positive electrode was generated. With the positive electrode exposed portion of the most initial winding side, which had a width of 22 mm, the longest positive electrode tab was welded in order to be welded with a sealing assembly.

### [Production of Negative Electrode]

Mixing 95 parts by mass of graphite, 5 parts by mass of SiO, 1 part by mass of carboxymethylcellulose (CMC), and 1 part by mass of styrene-butadiene rubber (SBR) was performed, and an appropriate amount of water was added to prepare a negative electrode mixture slurry. Then, this negative electrode mixture slurry was applied on both surfaces of a band-shaped negative electrode current collector made of copper foil so as to form a negative electrode exposed portion on an end on the terminal winding side. This applied film was dried and then rolled, and cut to a predetermined electrode plate size to produce a negative electrode in which negative electrode mixture layers were formed on both the surface of the positive electrode current collector with 959 mm in entire length. A negative electrode tab made of nickel was welded with the negative electrode exposed portion.

### [Production of Electrode Assembly]

The above positive electrode and the above negative electrode were wound with a separator made of a polyolefin resin interposed therebetween to produce an electrode assembly. The electrode assembly satisfied the following relationship, as in the example illustrated in FIG. 4: an exposed portion angle θ of the positive electrode exposed portion 34a > an exposed portion angle θ of the positive electrode exposed portion 34b > an exposed portion angle θ of the positive electrode exposed portion 34c > an exposed portion angle θ of the positive electrode exposed portion 34d.

### [Preparation of Non-Aqueous Electrolyte]

Into 100 parts by mass of a mixed solvent composed of ethylene carbonate (EC) and dimethyl carbonate (DMC) (EC:DMC = 1:3 at a volume ratio), 5 parts by mass of vinylene carbonate (VC) was added. Into this mixed solvent, LiPF₆ was dissolved so that the concentration was 1.5 mol/L to prepare a non-aqueous electrolyte.

### [Production of Secondary Battery]

Insulating plates were disposed on upper and lower sides of the above electrode assembly respectively, and the electrode assembly was housed in a cylindrical exterior housing can. Then, a negative electrode tab was welded with a bottom of the exterior housing can, and the positive electrode tabs were welded with each other and the longest positive electrode tab was then welded with a sealing assembly. Thereafter, the electrolyte was injected inside the exterior housing can by a pressure reducing method, and then an opening end of the exterior housing can was sealed to be caulked to the sealing assembly with a gasket interposed therebetween to produce a secondary battery. A designed capacity of the produced secondary battery was 4850 mAh.

### <Comparative Example>

A secondary battery was produced in the same manner as in Example except that, in the production of the positive electrode, widths of the positive electrode exposed portions in the longitudinal direction were set to 8 mm, 12 mm, 26 mm, and 53 mm in this order from the initial winding side so that at least a part of each of the positive electrode exposed portions was included within a predetermined range based on the positive electrode exposed portion on the most initial winding side even when thickness variation of the positive electrode was generated.

### [Evaluation of Battery Capacity]

Under an environment temperature at 25°C, the non-aqueous electrolyte secondary batteries of Example and Comparative Example were charged at a constant current of 1455 mA (0.3 C) until 4.2 V, and then charged at a constant voltage of 4.2 V until a current value reached 97 mA (0.02 C). After the non-aqueous electrolyte secondary batteries were left to stand for 20 minutes, the batteries were discharged at a constant current of 2425 mA (0.5 C) until 2.5 V to specify a discharge capacity in this time as a battery capacity.

Table 1 summarizes the evaluation results of the battery capacities of the non-aqueous electrolyte secondary batteries of Example and Comparative Example.

**[Table 1]**

| | Battery capacity [mAh] |
|---|---|
| Example | 4479 |
| Comparative Example | 4209 |

In the battery of Comparative Example, the exposed portion angle of each of the positive electrode exposed portions is regulated so that at least a part of each of the positive electrode exposed portions is included within a predetermined range based on the positive electrode exposed portion on the most initial winding side even when variation of the positions of the positive electrode exposed portions is generated due to thickness variation of the positive electrode. However, the battery of Comparative Example has longer positive electrode exposed portions than the battery of Example, and has a reduced mass of the positive electrode mixture layer. Table 1 demonstrates that the battery capacity of the battery of Comparative Example considerably decreases compared with the battery capacity of the battery of Example. As above, the plurality of the positive electrode tabs may be connected to predetermined positions according to the thickness variation of the positive electrode with inhibiting a decrease in the battery capacity by setting the exposed portion angle θ of the positive electrode exposed portion 34 positioned on the initial winding side to be larger than the exposed portion angle θ of the positive electrode exposed portion 34 positioned on the terminal winding side, as the battery of Example.

### REFERENCE SIGNS LIST

10 Secondary battery, 11 Positive electrode, 12 Negative electrode, 13 Separator, 14 Electrode assembly, 15 Exterior housing can, 16 Sealing assembly, 17, 18 Insulating plate, 19, 19a, 19b, 19c, 19d Positive electrode tab, 20 Negative electrode tab, 21 Grooved portion, 22 Filter, 23 Lower vent member, 24 Insulating member, 25 Upper vent member, 26 Cap, 26a Opening, 27 Gasket, 30 Positive electrode mixture layer, 32 Positive electrode current collector, 34, 34a, 34b, 34c, 34d Positive electrode exposed portion, C Winding center, θ Exposed portion angle

## Claims

1. A non-aqueous electrolyte secondary battery, comprising:
an electrode assembly in which a first electrode and a second electrode having different polarities from each other are wound with a separator interposed therebetween;
an electrolyte liquid; and
a cylindrical exterior housing can housing the electrode assembly and the electrolyte liquid, wherein
the first electrode has a current collector and a mixture layer stacked on at least a part of a surface of the current collector,
a plurality of exposed portions where the current collector is exposed is formed on a surface of the first electrode along a winding direction of the electrode assembly, and a tab is connected to each of the exposed portions, and
when a rotation angle from an end on an initial winding side to an end on a terminal winding side of the exposed portion relative to a winding center of the electrode assembly is defined as an exposed portion angle, an exposed portion angle of the exposed portion positioned on the initial winding side is larger than an exposed portion angle of the exposed portion positioned on the terminal winding side.

2. The non-aqueous electrolyte secondary battery according to claim 1, wherein the first electrode is a positive electrode.
